# DEMANDE DE BREVET EUROPEEN

(11) **EP 1 318 619 A1**
(43) Date de publication de la demande: **11.06.2003**
(21) Numéro de dépôt: 01403142.1
(22) Date de dépôt: 06.12.2001
(51) Int. Cl.: H04B 10/12, G01S 5/16

(54) **Marqueur temporel optique-radio et procédé de localisation de sources d'ondes optiques par des signaux radio**

(71) Demandeur: Le Boulc'h, Didier, 31780 Castelginest (FR); Grimault, Christophe, 35135 Chantepie (FR)
(72) Inventeur: Le Boulc'h, Didier, 31780 Castelginest (FR); Grimault, Christophe, 35135 Chantepie (FR)

(57) **Abrégé**

la présente invention concerne un dispositif et deux procédés pour localiser précisément, après détection, une source isolée d'ondes optiques.

Le dispositif selon l'invention est caractérisé en ce qu' il transforme la détection de l'onde optique en une information temporelle précise sur l'instant de cette détection, et qu'il transporte cette information via un signal radio. Le signal radio sera alors « marqué temporellement » par l'instant de détection de l'onde optique. Ce dispositif permettra de localiser la source optique: soit grâce à un mouvement déterministe du détecteur optique ( cas des sources continues) soit grâce à l'usage de multiples dispositifs similaire par une méthode géométrique de type 'triangulation'.

En référence à la figure 1, le dispositif selon l'invention comporte au minimum, et de manière non exhaustive: un détecteur (3)d'ondes optiques, un générateur de signal(4), une chaîne d'émission radio(5), et une antenne (6), et de manière optionnelle une référence horaire précise ( horloge, compteur, oscillateur)

## Description

la présente invention concerne un dispositif et deux procédés pour localiser précisément, dans un très large champ de vue, une source isolée d'ondes optiques. Le premier procédé est adapté à la localisation d'une source de type impulsionnel (flash); le second procédé est adapté à la localisation d'une source de type continu .

Le dispositif selon l'invention nécessite le couplage d'un détecteur d'ondes optiques (par exemple et de manière non limitative dans les gammes de longueur d'onde infrarouge, visible, ultraviolet, rayons X, gamma..) à un émetteur de signaux radio (par exemple et de manière non limitative dans les gammes de fréquence VHF, UHF, SHF, EHF).

Une source d'ondes optiques (que son spectre soit visible ou invisible) peut traditionnellement être détectée par un récepteur adapté aux caractéristiques des ondes optiques émises par ladite source.
D'autres instruments optiques plus sophistiqués permettent non seulement de détecter mais également de déterminer la localisation de la source des ondes optiques, dans un domaine de surveillance appelé champ de vue.
Ces dispositifs de localisation deviennent vite complexes et onéreux lorsque les exigences en précision de localisation et en largeur du champ de vue croissent simultanément.

Le dispositif et les procédés selon l'invention permettent de localiser une source optique isolée avec un gain très significatif en étendue de la zone surveillée et en coût du système par rapport aux systèmes conventionnels, tout en assurant une bonne précision de localisation.

Le dispositif selon l'invention est caractérisé en ce qu'il transforme la détection de l'onde optique en une information temporelle précise sur l'instant de cette détection, et qu'il transporte cette information via un signal radio. Le signal radio sera alors « marqué temporellement » par l'instant de détection de l'onde optique.

Les récepteurs optiques sont conçus pour reconnaître des ondes optiques ayant certaines caractéristiques particulières (par exemple une longueur d'onde, une puissance, une polarisation, ou un spectre particuliers).
Dès la réception par le récepteur optique de l'onde optique ayant les caractéristiques particulières attendue, celui ci envoie un ordre à un générateur de signal, celui-ci élabore un signal comportant au minimum et de manière non limitative une information précise sur l'instant de réception de l'onde optique, puis transmet ledit signal à la chaîne radio. Cette chaîne se termine par une antenne, qui va rayonner dans l'espace libre (vide, atmosphère, ..), et ainsi tranporter le message sur l'instant d'arrivée de l'onde à un détecteur distant.

Le détecteur d'ondes optiques peut, de manière non limitative, recueilir des informations additionnelles sur l'onde détectée ( longueur d'onde, puissance, polarisation, spectre ) et les transmettre sous forme codée dans le message radio généré par le générateur de signal.

Les figures annexées illustrent l'invention.

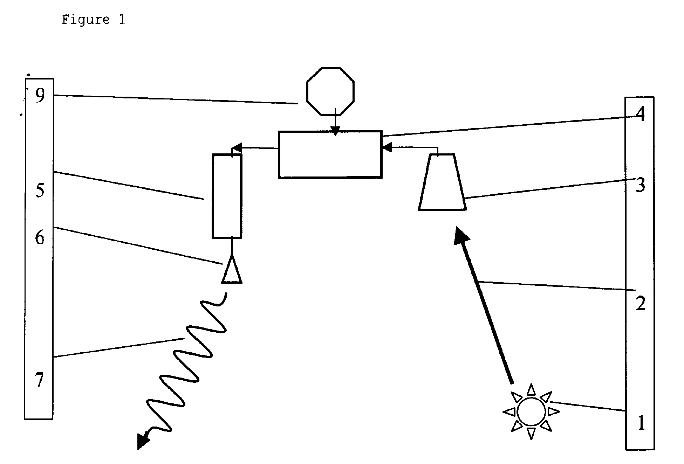

La figure 1 représente le dispositif selon l'invention et son environnement.
La figure 2 représente le procédé de localisation des sources d'ondes optiques de type impulsif.

En référence à ces figures, le dispositif selon l'invention comporte au minimum, et de manière non exhaustive: un détecteur (3)d'ondes optiques, un générateur de signal(4), une chaîne d'émission radio(5), et une antenne (6), reliés entre eux de façon à ce que le détecteur d'ondes optique, après avoir détecté une onde optique (2), issue de la source (1) et conforme aux caractéristiques attendues, commande le générateur de signal (4)afin que celui ci génère et transmette un signal à la chaîne d'émission radio (5), qui elle même transmet ce signal à l'antenne(6), laquelle fait rayonner le message radio correspondant (7) dans l'espace libre.

L'ensemble (détecteur optique (3)+ générateur de signal(4) + chaîne émettrice radio (5) + antenne (6)), fonctionnant tel que décrit par la présente invention est dénommé ci après « marqueur temporel optique /radio » ou « MTOR ».Ce dispositif peut être complété de manière non limitative par une horloge interne éventuelle (9).

### Deux modes préférentiels de réalisation :

Selon le premier mode de réalisation préférentiel, le MTOR ne possède aucune référence horaire, ni interne, ni externe, le signal généré ne comporte donc aucune information sous forme codée sur l'heure de réception de l'onde optique mais c'est l'instant de transmission du signal radio lui même qui transporte cette information, laquelle est simplement affectée par le délai introduit par le MTOR entre l'arrivée de l'onde optique et la transmission du signal radio généré.
Afin de s'assurer que le marqueur temporel optique /radio ne biaise pas la mesure du temps d'arrivée de l'onde optique, il faut connaître précisément son délai de réaction à une sollicitation par une onde optique. Si possible, les temps de réaction de différents marqueurs optique /radio seront tous identiques; à défaut ils devront être connus avec précision et compensés lors du traitement du procédé selon l'invention.

Le signal généré peut être, dans ce premier mode de réalisation préférentiel, caractérisé par un spectre large ( spectre étalé, ou durée d'impulsion très courte) afin d'améliorer la précision de la mesure de son instant d'émission.

Selon le second mode de réalisation préférentiel, le MTOR peut accéder à une référence horaire précise : soit il comporte en plus des éléments précités une horloge interne (9) permettant d'accéder à une référence de l'heure locale, ou bien il peut accéder à cette information horaire dans son environnement immédiat.(horloge externe). Cette horloge, à titre d'exemple non limitatif peut être un oscillateur, un compteur, une horloge très précise, ou un récepteur de signal de datation. Le générateur de signal (4) peut alors recevoir une information temporelle précise de cette référence horaire, et le signal généré peut alors comporter sous forme codée, une information précise sur l'heure locale exacte de détection de l'onde optique.

Dans ce second mode de réalisation préférentiel, la transmission du signal radio peut être différée. Une mémoire ou un enregistreur sont alors nécessaires pour stocker dans le MTOR les informations détectées par le détecteur d'onde optique et l'instant précis de leur détection.

### Selon des modes de réalisation particuliers :

La chaîne radio émission (5) peut comprendre un ou plusieurs filtres, un ou plusieurs mélangeurs de fréquences (transposition), et un ou plusieurs amplificateurs.

L'antenne (6) peut être assez peu directive afin d'éclairer une zone assez large.

Le générateur de signal(4) peut également s'arrêter d'émettre, ou modifier le signal émis lorsque le détecteur d'ondes optiques détecte les ondes attendues.

Le détecteur d'ondes optiques peut être optimisé pour détecter les rayonnements provenant de combustions violentes, par une sensibilité particulière dans les bandes infrarouge, visible, ou ultra violet.

Le détecteur d'ondes optiques peut être optimisé pour détecter les rayonnements provenant de transformations du noyau de l'atome, par une sensibilité particulière dans les bandes des rayons X ou gamma.

Le générateur de signal(4) peut également modifier le signal émis en fonction des caractéristiques (intensité, longueur d'onde, polarisation ...) des ondes optiques reçues.

Le générateur de signal(4) peut également s'arrêter d'émettre, ou modifier le signal émis lorsque le détecteur d'ondes optiques ne détecte plus les ondes attendues.

Le générateur de signal(4) peut produire des signaux pré-enregistrés dans une mémoire ou un générateur de séquence pseudo aléatoire.

Afin d'assurer un large champ de vue des détecteurs optiques, les MTOR peuvent être placés sur des mats, sur des points hauts ou reliefs, sur des ballons atmosphériques ou stratosphériques, sur des aéronefs ou sur des satellites.

### Procédé selon l'invention, permettant de localiser une source optique ayant une durée d'émission très courte ( impulsion, flash)

Lorsque les ondes optiques à détecter sont de durée temporelle très courte, il est nécessaire de recourir à un procédé original, utilisant plusieurs dispositifs MTOR selon l'invention, et ayant des champs de vue au moins partiellement superposés.

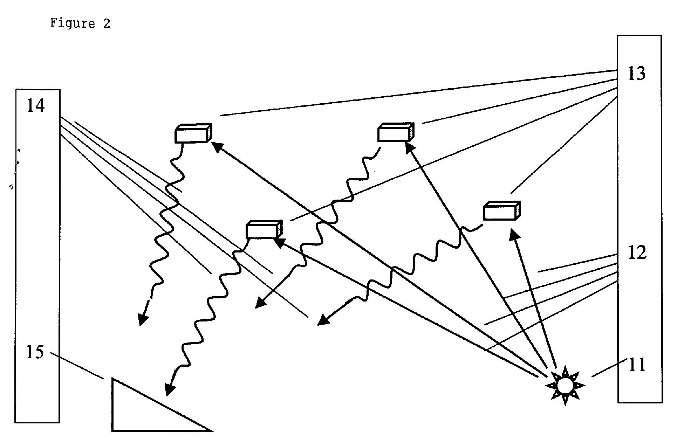

Afin de permettre la localisation précise de la source de courte durée d'émission, il est nécessaire d'avoir recours à un procédé original, objet de la présente invention, et représenté sur la figure 2.

**Le procédé** selon l'invention comporte une première caractéristique qui consiste à disposer en plusieurs endroits géographiquement écartés, un marqueur temporel optique radio (13)tel que décrit par la présente invention. Il comporte une seconde caractéristique qui consiste à disposer un ou plusieurs récepteurs radio (15)tels que chaque signal radio (14) émis par un MTOR peut être capté au minimum par un récepteur radio(15), de sorte que lorsque le récepteur optique de chaque MTOR(13) est illuminé par les ondes optiques recherchées(12), issues de la source (11), l'émetteur radio de chaque MTOR diffuse un signal radio (14) marqué temporellement. Chaque signal radio peut alors être reçu par un ou plusieurs récepteurs radio. L'utilisation judicieuse de ces MTOR et du ou des récepteurs radios permet de localiser la source de l'onde optique par une méthode géométrique basée sur les chemins parcourus par les ondes optiques.
En effet, le lieu des positions possibles pour la source vue par un couple de détecteurs optiques est une surface hyperboloïdale dont les caractéristiques dépendent de la différence de temps d'arrivée de l'onde entre lesdits détecteurs.

Chaque couple de sources déterminent ainsi une surface de localisations possibles. L'intersection de ces diverses surfaces indique la position de la source.

Dans le second mode préférentiel de réalisation du dispositif selon l'invention, chaque MTOR comporte une référence interne de l'heure exacte ou peut accéder à cette information horaire dans son environnement immédiat. Cette référence horaire permet de mesurer l'heure exacte d'arrivée de l'onde optique attendue et de transmettre cette information vers le récepteur de signaux radio par chaque MTOR. Le récepteur radio possède alors toute l'information sur les instants d'arrivée de l'onde optique sur les divers détecteurs des MTOR.

Dans le premier mode préférentiel de réalisation du dispositif selon l'invention, les MTOR ne comportent pas de référence horaire précise mais transmettent sans délai vers le récepteur radio le message généré suite à la détection de l'onde optique.

Afin de faciliter la mesure des écarts entre les instants d'arrivée des signaux radio issus des différents MTOR, ces signaux pourront alors véhiculer un message similaire, facilitant l'inter-corrélation de ces signaux entre eux.

La réception des signaux radio par un ou plusieurs récepteur(s)radio permet de mesurer les instants d'arrivée de chacun des signaux radio. Ces instants d'arrivée des signaux radio sont déterminés par les facteurs suivants : l'instant d'émission de l'onde optique originale, la position de la source optique, la position de chaque marqueur temporel optique /radio, la position de chaque récepteur radio, et la vitesse de propagation des ondes dans les milieux traversés. En effet, dans l'hypothèse ou l'instant et le lieu d'émission de la source optique sont connus, la connaissance des positions précises des différents MTOR décrits par la présente invention permet de déterminer le chemin parcouru par les ondes optique et les signaux radio, et donc de prédire l'instant d'arrivée des dits signaux. A l'inverse, dans le cas de la présente invention, seuls le lieu et l'instant d'arrivée sont connus, un calcul inverse permet d'estimer la position et l'instant d'émission de l'onde optique, en remontant le chemin parcouru par les signaux radio et les ondes optiques.

Selon les deux modes de réalisation préférentiels, il est possible de s'affranchir de la non connaissance a priori de l'instant d'émission de 1' onde optique en calculant la différence du temps d'arrivée entre les signaux issus de deux MTOR de positions différentes.

Cette différence entre les deux instants d'arrivée correspond à une surface de localisations possibles pour la source. Si plusieurs marqueurs (MTOR) sont positionnés à des endroits différents, chaque couple de marqueurs donnera une surface hyperboloïdale de localisations possibles pour la source optique, et le procédé permettra d' estimer la position de la source au voisinage de l'intersection de toutes ces surfaces.

Afin de recueillir suffisamment d'information pour localiser parfaitement la source, le système réalisé selon ce second procédé doit être caractérisé par plusieurs marqueurs temporels optique /radio, typiquement trois, quatre ou plus.

Ces MTOR doivent être placés de manière à être situés en visibilité directe de la zone surveillée et d'un récepteur radio au minimum.
Les marqueurs concourant au positionnement d'une source sont idéalement au nombre de quatre minimum. Un nombre de marqueurs optique radio inférieur permet également d' estimer la position de la source optique grâce à des informations annexes par exemple l'altitude de la source, ou la connaissance de l'instant d'émission. A défaut d'information complémentaire, le positionnement sera moins précis lorsque le nombre de marqueurs optique radio dans les bonnes conditions de visibilité est inférieur à quatre. Le nombre de marqueurs radio peut être largement supérieur à quatre, l'augmentation de leur nombre permettra d'améliorer la précision de l'estimation du positionnement, et d'accroître le champ de vue global du dispositif.

Afin de s'assurer d'une très bonne connaissance des positions du ou des récepteurs radio, ainsi que des positions de chaque marqueur temporel optique / radio un système de calibration de la géométrie pourra être utilisé. Il permettra en particulier de connaître avec une grande précision les distances entre les MTOR et le ou les récepteurs d'ondes radio, ainsi que les positions exactes des MTOR.

Ce procédé peut permettre de localiser la source d'un éclair atmosphérique, ou d'une combustion violente, comme d'une explosion.
Ce procédé peut permettre de localiser une source isolée de rayons X ou gamma, provenant de la fusion ou de la fission du noyau de 1' atome.

### Procédé selon l'invention, permettant de localiser une source optique ayant une durée d'émission longue :

Dans le cas d' une source optique non impulsive mais ayant une durée d'émission suffisamment longue, le procédé adapté à la détection des sources impulsives ne fonctionne plus et un second procédé utilisant le dispositif original selon l'invention doit être utilisé. Ce nouveau procédé est caractérisé en ce qu'il peut s'accomoder de l'utilisation d'un seul dispositif MTOR tel que décrit dans la présente invention, à la condition que le détecteur optique du MTOR, soit animé d'un mouvement permanent ( translation, rotation ou mouvement hybride ) et doté d'un champ de vue limité afin que la source se retrouve parfois en visibilité et parfois hors de visibilité du détecteur. Ce procédé est également caractérisé en ce que le déplacement du détecteur doit être parfaitement déterminé en fonction de l'heure locale.
la position coïncidente (respectivement non coïncidente) du champ de vue du détecteur et de la source entraîne alors la détection (respectivement la non détection) de la source par le marqueur temporel optique/ radio.
La corrélation existant alors entre 1' heure locale et la position du champ de vue d'une part, et entre, l'heure locale de détection et le message transmis d'autre part, permet d'apporter via le message radio transmis une information précise sur le positionnement de la source.
Le détecteur optique du MTOR peut alors être doté d'un champ de vue total large, mais sa zone de visibilité doit être limitée à un instant donné.

Conformément à l'un des modes de réalisation particuliers du dispositif selon l'invention, l'information reçue par le MTOR sur l'onde optique ainsi que l'instant précis de cette détection peuvent être enregistrées dans le MTOR avant d'être transmises au récepteur via le signal radio.

Ce procédé peut permettre de localiser une source étendue de rayonnements continus. Il permet également de cartographier l'intensité du rayonnement sur l'étendue de la source lorsque le message transmis par le MTOR est porteur d'une information sur cette intensité.

## Revendications

1. Dispositif pour transformer une onde optique non guidée en un signal radio marqué temporellement et **caractérisé en ce qu'**il comporte au minimum, et de manière non exhaustive : un détecteur d'ondes optiques, un générateur de signal, une chaîne d'émission radio, et une antenne, reliés entre eux de façon à ce que le détecteur optique, après avoir détecté une onde optique conforme aux caractéristiques attendues, commande le générateur de signaux afin que celui ci génère et transmette via la chaîne d'émission radio, et l'antenne, un signal radio porteur d'une information temporelle précise sur l'instant de réception de l'onde optique.

2. Dispositif selon la revendication 1 et **caractérisé en ce que** le signal radio transmis véhicule, par l' instant même de son émission, ou par sa modulation en amplitude, en fréquence, en phase, en message ou en polarisation, une information précise sur l'instant de détection de l'onde optique.

3. Dispositif selon la revendication 1 et **caractérisé en ce qu'** il comporte également une horloge, un oscillateur, un compteur précis ou un récepteur de signal horaire et que le signal radio transmis transporte, sous forme codée, l' information fournie par cette horloge ou cet oscillateur ou ce codeur ou ce récepteur de signal horaire et indiquant l'instant de détection exact de l'onde optique.

4. Dispositif selon l'une quelconque des revendications précédentes et **caractérisé en ce que** le générateur de signal radio modifie le signal transmis (message, fréquence) lorsque le détecteur d'ondes optiques détecte des modifications des caractéristiques des ondes reçues: intensité, longueur d'onde, polarisation.

5. Dispositif selon les revendications 1 et 4 et **caractérisé en ce que** le générateur de signal radio arrête ou modifie les caractéristiques du signal transmis lorsque le détecteur d'ondes optiques ne détecte plus les ondes attendues.

6. Dispositif selon la revendication 1 et **caractérisé en ce que** le générateur de signal cesse toute transmission du signal lorsque l'onde optique attendue est détectée.

7. Dispositif selon les revendications 1 et 3 et éventuellement 4 et **caractérisé en ce que** les informations détectées, ainsi que leur instant de détection sont mémorisées dans le MTOR avant d'être transmises via la chaîne d'émission radio et l'antenne.

8. Dispositif selon les revendications 1 et 3 et **caractérisé en ce que** le MTOR est doté d'un champ de vue limité, ou partiellement masqué et que ce champ de vue est animé d'un mouvement parfaitement déterminé en fonction de l'heure locale.

9. Dispositif selon l'une quelconque des revendications précédentes et **caractérisé en ce qu'**il est situé à point haut, sur un relief, un mat, un ballon, un aéronef ou un satellite.

10. Dispositif selon les revendications 1 et 2 et **caractérisé en ce que** le générateur transmet un signal radio ayant un spectre large ( spectre étalé, ou durée d'impulsion très courte).

11. Dispositif selon les revendications 1 et l'une au moins des suivantes et **caractérisé en ce que** le détecteur optique fonctionne dans les bandes infra-rouge, visible ou ultraviolet afin de mesurer les instants d'arrivée d' ondes provenant de combustions violentes ou d'explosions .

12. Dispositif selon les revendications 1 et l'une au moins des suivantes et **caractérisé en ce que** le détecteur optique fonctionne dans les bandes des rayons X ou gamma afin de mesurer les instants d'arrivée d' ondes provenant de la fusion ou de la fission du noyau de l'atome.

13. Procédé pour localiser précisément une source optique continue rayonnant dans l' espace libre et **caractérisé en ce qu'**il comporte au minimum un dispositif (MTOR) selon les revendications 1 et l'une quelconque des suivantes et que le détecteur d'ondes optiques du MTOR soit animé d'un mouvement permanent, et déterminé en fonction de l'heure, et que au minimum un récepteur radio effectue la mesure via le signal radio généré par le MTOR des instants de détection (respectivement de non détection) par le MTOR des ondes optiques.

14. Procédé selon la revendication 13, et permettant de cartographier une source optique continue, éventuellement étendue, **caractérisé en ce qu'**il comporte au minimum un dispositif (MTOR) selon les revendications 1 et 4 et 8 et que le récepteur radio effectue la mesure via le signal radio généré par le MTOR des instants de détection et des caractéristiques (intensité, longueur d'onde, polarisation,... ) des ondes optiques.

15. Procédé selon la revendication 13 et 14 pour localiser précisément et cartographier une source optique rayonnant dans l' espace libre, **caractérisé en ce que** le MTOR selon l'invention est embarqué à bord d'un satellite et détecte selon la revendication 11 une source de combustion violente dans les bandes infrarouge, visible ou ultraviolet,

16. Procédé selon la revendication 13 et 14 pour localiser précisément et cartographier une source optique rayonnant dans l' espace libre, caratérisé en ce que le MTOR selon l'invention est embarqué à bord d'un satellite et détecte selon la revendication 12 détecte un nuage rayonnant dans les bandes des rayons X ou gamma.

17. Procédé pour localiser précisément une source optique impulsionelle rayonnant dans l' espace libre et **caractérisé en ce qu'**il comporte plusieurs (trois au minimum ) dispositifs MTOR similaires, selon les revendications 1 et éventuellement suivantes, et disposant de champs de vues se recouvrant au moins partiellement, ainsi que, au minimum un récepteur radio et **caractérisé en ce que** le récepteur radio effectue la mesure des instants d'arrivée des ondes optiques reçues par les MTOR via les signaux radios émis par les MTOR.

18. Procédé selon la revendication 17 et **caractérisé en ce que** le récepteur radio effectue des intercorrelations entre les signaux radio reçus et détermine ainsi les écarts temporels entre les instants d'arrivée des signaux radio émis par les MTOR reçus.

19. Procédé selon la revendication 17, utilisant un dispositif selon l'une au moins des revendications 1 à 11 et **caractérisé en ce que** ces dispositifs sont placés sur des satellites indépendants, en orbite autour de la terre, et permettent de localiser des explosions ou des combustions violentes, à partir de leurs rayonnements optiques impulsionnel dans les bandes infrarouge, visible, Ultra-violet, des rayons X ou des rayons gamma.
